# EUROPEAN PATENT SPECIFICATION

(11) **EP 3 761 481 B1**
(45) Date of publication and mention of the grant of the patent: **30.03.2022**
(21) Application number: 20182698.9
(22) Date of filing: 26.06.2020
(51) Int. Cl.: H02J 50/10, A47F 10/04, B62B 3/14, H02J 50/12, B62B 5/00

(54) **NON-CONTACT POWER SUPPLY UNIT**
KONTAKTLOSE ENERGIEVERSORGUNGSEINHEIT
UNITÉ DE TRANSFERT D'ÉNERGIE SANS FIL

(30) Priority: 02.07.2019 JP 2019124030
(43) Date of publication of application: 06.01.2021
(73) Proprietor: Toshiba TEC Kabushiki Kaisha, Tokyo 141-8562 (JP)
(72) Inventor: ENOMOTO, Hideki, Tokyo 141-8562 (JP); MATSUMURA, Kazuyuki, Tokyo 141-8562 (JP)
(74) Representative: Bandpay & Greuter

(56) References cited:
- EP-A2- 2 273 444
- CN-A- 107 733 015
- JP-A- 2006 217 690

## Description

### FIELD

Embodiments of the present invention relate to a non-contact power supply unit.

### BACKGROUND

In a retail store such as a supermarket, a so-called shopping cart in which a customer places a commodity to be purchased. It is possible to improve convenience by attaching an apparatus such as a commodity registration apparatus for reading commodity information capable of identifying commodities.

When the device is attached to the cart, it is necessary to charge the power used by the device. Therefore, a method of charging by non-contact power supply may be considered. In this case, a non-contact power supply device to be powered by non-contact power supply is installed in the store.

However, the size of a non-contact power supply device installed in a store differs depending on the situation of each store. That is, how many cart is to be charged by non-contact power supply is different depending on the situation of each store. Therefore, there is a need for a non-contact power supply device capable of arbitrarily changing the number of charges in accordance with the situation of a store.

The documents JP 2006 217690 A, EP 2 273 444 A2 and CN 107 733 015 A all disclose a power supply unit for supplying power to a power receiving unit of a device mounted on a cart. JP 2006 217690 A and CN 107 733 015 A disclose a non-contact power supply and EP 2 273 444 A2 discloses a modular power supply unit.

### BRIEF DESCRIPTION OF THE DRAWINGS

FIG. 1 is a perspective view showing an example of a non-contact power supply system according to the present embodiment.
FIG. 2 is a perspective view showing an example of a cart.
FIG. 3 is a perspective view showing an example of a non-contact power supply device.
FIG. 4 is a top view showing an example of a non-contact power supply device.
FIG. 5 is a cross-sectional view showing an example of a cross section of the positioning portion.
FIG. 6 is a top view showing an example of a top unit.
FIG. 7 is a top view showing an example of the extension unit.
FIG. 8 is a top view showing an example of an end unit.

### DETAILED DESCRIPTION

To this end, there is provided a non-contact power supply unit includes a placement unit, a power transmitting unit and a connecting unit. The cart having a device and a power receiving unit for receiving power to be supplied to the device is placed in the placement unit. The power transmitting unit is provided on the placement unit and transmits power to the power receiving unit by non-contact power supply. The connecting unit connects the placement unit of the own device to the placement unit of a non-contact power supply unit different from the own device.

The non-contact power supply unit according to the present invention comprises a placement unit on which the cart is to be stored (placed); a power transmitting unit provided on the placement unit configured to transmit power to the power receiving unit by non-contact power supply; and at least one connecting unit for connecting the placement unit to another placement unit.

The connecting unit may be provided at a position corresponding to the type of the own device.

In one case, the non-contact power supply unit is a first non-contact power supply unit wherein stopping portion. The first non-contact power supply unit has a stopping portion for stopping a cart running on the upper surface of the placement unit (24) at a front end in an entering direction in which the cart advances onto placement unit to be . The connecting unit is provided at a rear end in the entering direction of the non-contact power supply unit.

In another case, the non-contact power supply unit is a second non-contact power supply unit in which the connecting unit is provided both at a front end of the non-contact power supply unit in an entering direction in which the cart advances onto placement unit to be stored, and at a rear end in the entering direction of the non-contact power supply unit.

The non-contact power supply unit may also be a third non-contact power supply unit in which a connecting unit is provided at a front end of the cart in an entering direction in which the cart advances onto placement unit to be stored, and at least one running path of a wheel of the cart. The running path has an entering part with a width in a direction orthogonal to the entering direction which becomes narrower in an entering direction .

The present invention also relates to a non-contact power supply device comprising a plurality of non-contact power supply units as defined above.

The non-contact power supply device may comprise a first non-contact power supply unit, at least one second non-contact power supply unit, and a third non-contact power supply unit, in which the first non-contact power supply unit is connected to the second non-contact power supply unit through the connecting unit thereof, the third non-contact power supply unit connected to the second non-contact power supply unit through the connecting unit thereof.

The non-contact power supply device may further comprise a plurality of second non-contact power supply units. In this case, the connecting unit formed at the front end of one of the second non-contact power supply units is connected to the connecting unit formed at the rear end of another second non-contact power supply units.

An embodiment of a non-contact power supply unit will now be described in detail with reference to the accompanying drawings. The embodiments described below are one embodiment of a non-contact power supply unit. Therefore, the configuration, specification and the like of the present invention are not limited to the embodiments described below. The non-contact power supply unit of the present embodiment is an application example to a non-contact power supply unit which is provided in a non-contact power supply device which supplies power to a cart equipped with a commodity registration apparatus in a retail store in a non-contact manner.

The present invention is set out in the appended set of claims

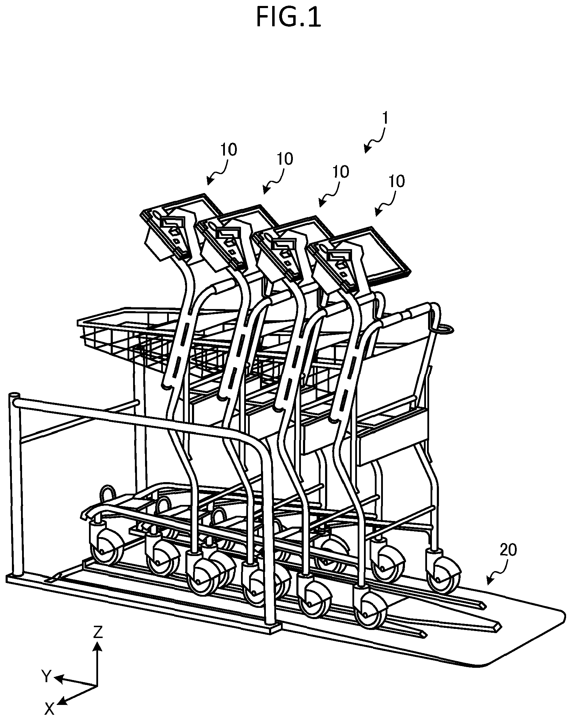

FIG. 1 is a perspective view showing an example of a non-contact power supply system 1 according to the present embodiment. The non-contact power supply system 1 includes a cart 10 and a non-contact power supply device 20. FIG. 1 shows a case where a non-contact power supply device 20 is installed in a cart place where a cart 10 is placed in a retail store.

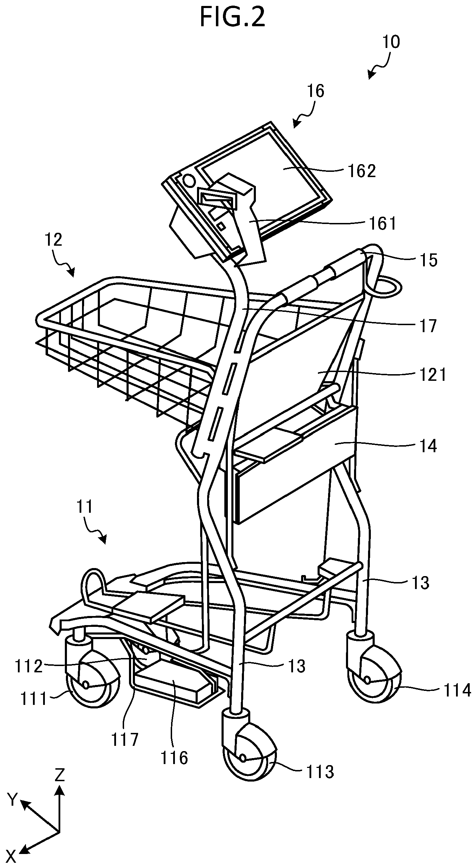

FIG. 2 is a perspective view showing an example of the cart 10. In a retail store such as a supermarket, a commodity which a customer collects to purchase is placed in a cart 10. The cart 10 is a cart which is moved by an operator's hand.

More specifically, cart 10 is provided with a base portion 11 for movement. The base portion 11 is provided with a pair of front wheels 111 and 112 and a pair of rear wheels 113 and 114 as wheels of the cart 10. The interval between the front wheels 111 and the front wheels 112 is smaller than the interval between the rear wheels 113 and 114. A mounting part 117 is disposed below the base portion 11. A power receiving unit 116 which receives electric power by non-contact power supply is attached to the mounting part 117. The power receiving unit 116 is disposed substantially horizontally.

A housing part 12 having an opening on its upper surface is disposed above the base portion 11. The housing part 12 is supported by a support column 13 extending from the base portion 11. The housing part 12 is provided with a surface 121 capable of opening and closing on the rear side in the entering direction of the cart 10. Therefore, as shown in FIG. 1, by inserting the housing part 12 of the subsequent cart 10 into the housing part 12 of the previous cart 10, it is possible to integrate many carts 10 with a narrow area. Note that the cart 10 does not have to include the housing part 12. For example, the cart 10 may have a basket receiving part to receive a commodity basket which stores commodities therein, and the basket receiving part may be the housing part 12.

A holder 14 containing a secondary battery (not shown) is disposed below the housing part 12. The secondary battery is a battery for charging the electric power received by the power receiving unit 116.

The support column 13 is provided with a handle portion 15 to be gripped by a customer who moves the cart 10. The support column 13 is provided with a support part 17 for supporting the commodity registration apparatus 16 for registering the commodity for sale.

The commodity registration apparatus 16 is an apparatus for registering a commodity for sale. The commodity registration apparatus 16 includes a scanner 161 and a display unit 162. The scanner 161 reads commodity information of the commodity for sale. For example, the scanner 161 reads commodity codes that can be identified by a bar code or the like. The display unit 162 is, for example, a touch panel display. The display unit 162 displays a commodity read by the scanner 161, for example. The commodity registration apparatus 16 is driven by using the power charged in the secondary battery stored in the holder 14.

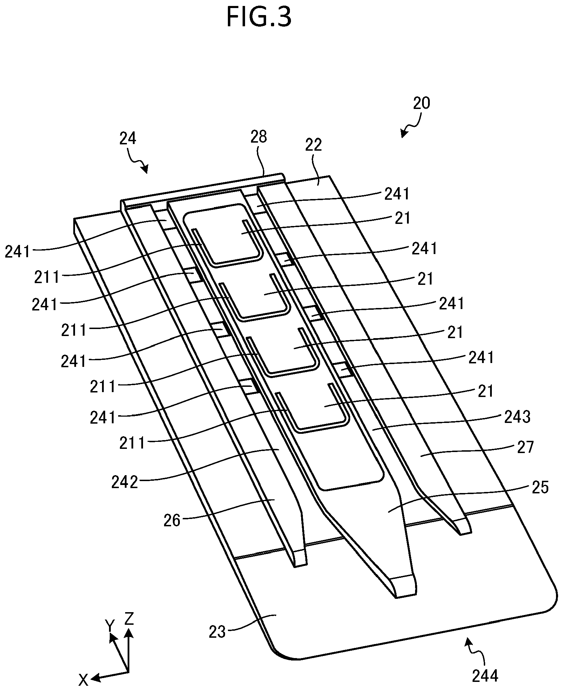

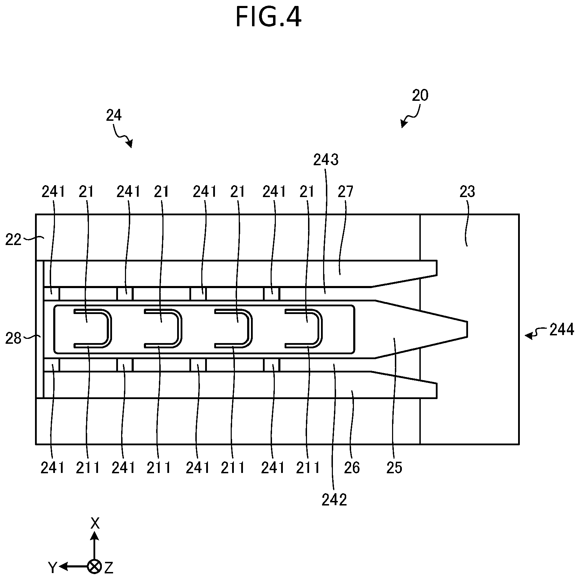

Next, a description will be given of the non-contact power supply device 20. FIG. 3 is a perspective view showing an example of the non-contact power supply device 20. FIG. 4 is a top view showing an example of the non-contact power supply device 20. The non-contact power supply device 20 includes a power transmitting unit 21 for transmitting electric power to a power receiving unit 116 of a cart 10 mounted thereon by non-contact power supply. However, when the power receiving unit 116 of the cart 10 is not located at a position opposed to the power transmitting unit 21 of the non-contact power supply device 20, the power supply efficiency is deteriorated. Therefore, the non-contact power supply device 20 is configured such that the cart 10 can be easily arranged at a position where the power receiving unit 116 and the power transmitting unit 21 are opposed to each other. In FIGS. 1 to 8, it is assumed that the direction in which the cart 10 enters the non-contact power supply device 20 is in the Y direction.

More specifically, the non-contact power supply device 20 is covered with a housing 22. The housing 22 includes one or more power transmitting units 21. The non-contact power supply device 20 is provided with a light emitting part 211 around the power transmitting unit 21. The light emitting unit 211 emits light when the power receiving unit 116 is located at a position opposed to the power transmitting unit 21. Thus, the manager or the like of the retail store can identify whether or not the battery is charged by the non-contact power supply. FIG. 3 and FIG. 4 show a non-contact power supply device 20 including a power transmitting unit 21 and a light emitting part 211.

Since the power transmitting unit 21 is incorporated in the housing 22, the no-contact power supply device 20 is relatively thick. Therefore, the non-contact power supply device 20 has a slope 23 on the entrance side of the cart 10. The slope 23 has an inclination from the surface on which the non-contact power supply device 20 is placed to the placement unit 24 on which the cart 10 is to be stored.

The placement unit 24 is provided on the upper surface of the non-contact power supply device 20 that is raised from the slope 23. The placement unit 24 is a region in which a cart 10 having a commodity registration apparatus 16 and a power receiving unit 116 for receiving power to be supplied to the commodity registration apparatus 16 is placed. The power transmitting unit 21 is disposed substantially horizontally at a position opposed to the power receiving unit 116 in the placement unit 24, and generates a magnetic field in the vertical direction. In this way, the power transmitting unit 21 transmits power to the power receiving unit 116 of the cart 10 by non-contact power supply. As a method of non-contact power supply, various methods such as electromagnetic induction type and magnetic field resonance type are known, but various types of methods can be used. In the present embodiment, the term "non-contact" is used in a state where the power transmission is carried out wirelessly. Therefore, even if the power transmitting unit 21 and the power receiving unit 116 are in contact with each other at the time of power supply, regardless of whether they are unintended or not, it is assumed that power is supplied in a non-contact manner as long as the power transmission is performed wirelessly.

In order to dispose the power transmitting unit 21 and the power receiving unit 116 at positions opposed to each other, the cart 10 must be placed at an appropriate position in the width direction orthogonal to the entering direction of the cart 10, that is, in the X-axis direction in the non-contact power supply device 20.

The non-contact power supply device 20 includes a central wheel guide portion 25, a first side wheel guide portion 26, and a second side wheel guide portion 27. The central wheel guide portion 25 is a convex part disposed substantially at the center of the non-contact power supply device 20. Further, the central wheel guide portion 25 extends from the entrance side of the cart 10 to the end of the placement unit 24 on which the cart 10 is placed. Further, the central wheel guide portion 25 is widened in width as it advances from the entrance side of the cart 10 to the placement unit 24. The central wheel guide portion 25 has a width substantially equal to the width from the front wheel 111 to the front wheel 112 of the cart 10 in the placement unit 24. By such a shape, the central wheel guide portion 25 determines the position in the width direction of the front wheels 111 and 112 of the cart 10. That is, the central wheel guide portion 25 determines the position of the cart 10 in the X-axis direction in the non-contact power supply device 20.

The first side wheel guide portion 26 and the second side wheel guide portion 27 are convex parts which are arranged laterally with respect to the central wheel guide portion 25 in the entering direction of the cart 10. The first side wheel guide portion 26 and the second side wheel guide portion 27 extend from the entrance side of the cart 10 to the end of the placement unit 24 on which the cart 10 is placed. Further, the first side wheel guide portion 26 and the second side wheel guide portion 27 are widened in width as they advance from the entrance side of the cart 10 to the placement unit 24. In addition, the first side wheel guide portion 26 has substantially the same width as the width from the front wheel 111 to the rear wheel 113 of the cart 10 in the placement unit 24. The second side wheel guide portion 27 has substantially the same width as the width from the front wheel 112 to the rear wheel 114 of the cart 10 in the placement unit 24.

Further, the interval between the inner side of the first side wheel guide portion 26 and the central wheel guide portion 25 is substantially the same as the width of the front wheel 111. The interval from the inner side of the second side wheel guide portion 27 to the central wheel guide portion 25 is substantially the same as the width of the front wheel 112.

Further, the width from the outside of the first side wheel guide portion 26 to the outside of the second side wheel guide portion 27 is substantially equal to the width from the rear wheel 113 to the rear wheel 114 of the cart 10. By such a shape, the first side wheel guide portion 26 and the second side wheel guide portion 27 determine the positions of the front wheels 111 and 112 and the rear wheels 113 and 114 of the cart 10 in the width direction.

Therefore, when the cart 10 is placed on the placement unit 24, the central wheel guide portion 25, the first side wheel guide portion 26 and the second side wheel guide portion 27 can determine the position of the cart 10 in the width direction in the non-contact power supply device 20. That is, the non-contact power supply device 20 can determine the position of the cart 10 in the X-axis direction.

The width of the gap between the central wheel guide portion 25 and the first side wheel guide portion 26 is substantially the same as the width of the front wheel 111. The front wheel 111 guided by the central wheel guide portion 25 and the first side wheel guide portion 26 runs in a gap between the central wheel guide portion 25 and the first side wheel guide portion 26. That is, the central wheel guide portion 25 and the first side wheel guide portion 26 form a first front wheel running path 242 on which the front wheel 111 of the cart 10 runs.

Similarly, the width of the gap between the central wheel guide portion 25 and the second side wheel guide portion 27 is substantially the same as the width of the front wheel 112. The front wheel 112 guided by the central wheel guide portion 25 and the second side wheel guide portion 27 runs in a gap between the central wheel guide portion 25 and the second side wheel guide portion 27. That is, the central wheel guide portion 25 and the second side wheel guide portion 27 form a second front wheel running path 243 on which the front wheel 112 of the cart 10 runs.

Further, the central wheel guide portion 25, the first side wheel guide portion 26 and the second side wheel guide portion 27 are widened in width as they advance from the entrance side of the cart 10 to the placement unit 24. In other words, the first front wheel running path 242 and the second front wheel running path 243 are substantially the same width as the front wheels 111 and 112 in the placement unit 24, but the portions entering the first front wheel running path 242 and the second front wheel running path 243 extend in the width direction. The central wheel guide portion 25, the first side wheel guide portion 26 and the second side wheel guide portion 27 have a convex shape.

That is, the placement unit 24 includes a first front wheel running path 242 and a second front wheel running path 243, which are the running paths of the wheels of the cart 10, in which the width in the direction orthogonal to the entering direction becomes narrower as the cart 10 advances from the entering side where the cart 10 enters to the entering direction of the cart 10. The placement unit 24 is provided with an entrance portion 244 of a first front wheel running path 242 and a second front wheel running path 243.

In this manner, the central wheel guide portion 25, the first side wheel guide portion 26 and the second side wheel guide portion 27 guide the front wheels 111, 112 of the cart 10. Therefore, the operator can easily run the cart 10 to the first front wheel running path 242 and the second front wheel running path 243 by pushing the cart 10 from the entrance side of the non-contact power supply device 20.

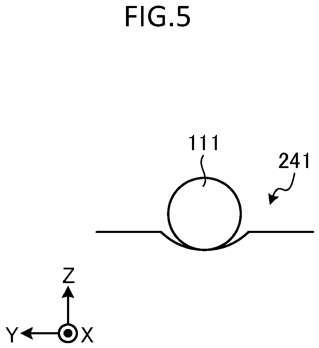

The first front wheel running path 242 and the second front wheel running path 243 are provided with positioning portions 241 for determining the position of the cart 10 in the entering direction. The positioning portions 241 locks the wheels of the cart 10, i.e., the front wheels 111 and 112. Here, FIG. 5 is a cross-sectional view showing an example of a cross section of the positioning portion 241. As shown in FIG. 5, the positioning portion 241 is, for example, a recessed part having a smooth curve.

In this way, since the positioning portion 241 has a recessed shape, the front wheels 111 and 112 are disposed on the rolling bottom surface. Therefore, the positioning portion 241 can determine the positions of the front wheels 111 and 112.

That is, the non-contact power supply device 20 can determine the position of the cart 10 in the entering direction in the placement unit 24.

Further, as shown in FIG. 5, the positioning portion 241 has a smooth curve. Therefore, when the cart 10 passes through the positioning portion 241, the operator can reduce a load to push the cart 10. The positioning portion 241 is not limited to a recessed part having a smooth curve, but may be a simple recessed part having no curved line. Further, the positioning portion 241 may be a convex part having a smooth curve or a simple convex part having no curved line.

Further, as shown in FIG. 1, in the cart 10, by inserting the housing part 12 of the following cart 10 into the housing part 12 of the cart 10, it is possible to integrate a large number of carts 10 with a small area. Therefore, the interval between the positioning portion 241 and the positioning portion 241 arranged in the rear of the cart 10 in the entering direction relative to the positioning portion 241 is shorter than the total length in the entering direction of the cart 10.

The placement unit 24 of the no-contact power supply device 20 is provided with a stopping portion 28 for stopping the cart 10 running on the surface on the placement unit 24, and the stopping portion 28 is provided on the front side of the placement unit 24 in the entering direction of the cart 10. More specifically, the placement unit 24 of the non-contact power supply device 20 includes a stopping portion 28 at the end of the entering direction of cart 10 in the first front wheel running path 242 and the second front wheel running path 243. The stopping portion 28 is a convex part extending from the outer side of the first side wheel guide portion 26 to the outside of the second side wheel guide portion 27. With such a shape, the stopping portion 28 prevents the front wheels 111 and 112 from being pushed out to the outside of the placement unit 24 when the cart 10 is pushed by the operator. That is, the stopping portion 28 prevents the cart 10 from being pushed out to the outside of the placement unit 24. Note that the stopping portion 28 is not limited to a convex part extending from the outside of the first side wheel guide portion 26 to the outside of the second side wheel guide portion 27, but also may be a projection provided in the first front wheel running path 242 or the second front wheel running path 243.

Here, the number of carts 10 required for each retail store is different. Further, the space where the carts are placed/stored depends on the store. That is, the size of the non-contact power supply device 20 placed in the store differs depending on the situation of each store. Therefore, it is preferable that the number of carts 10 to which the non-contact power supply device 20 can be charged at the same time can be arbitrarily changed.

The non-contact power supply device 20 is formed by connecting a non-contact power supply device unit. The non-contact power supply device unit is provided with a placement unit 24 of its own device and connecting units 291, 292, 293 and 294 for connecting the other placement unit 24 of a non-contact power supply unit which is different from its own device. The non-contact power supply device 20 connects the non-contact power supply units via the connection units 291, 292, 293 and 294, so that the number of the cart 10 which can be simultaneously charged can be arbitrarily increased. Further, the connection units 291, 292, 293 and 294 are provided at positions corresponding to the types of the non-contact power supply device units.

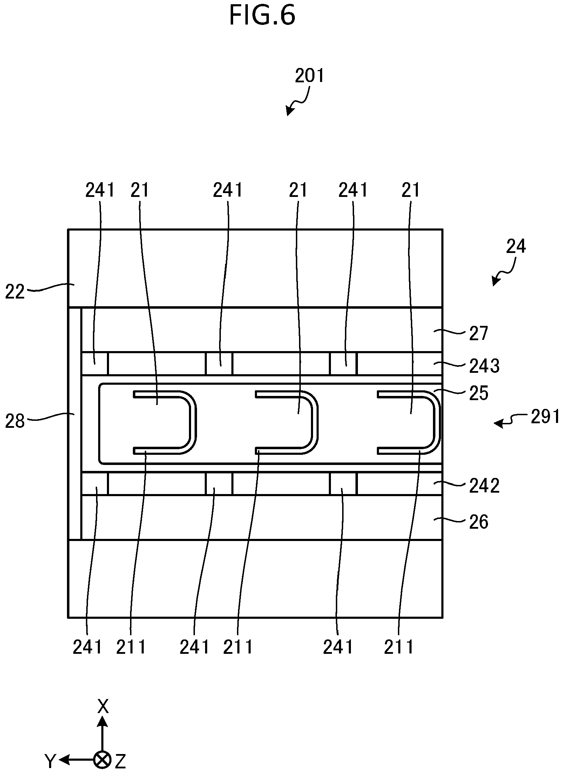

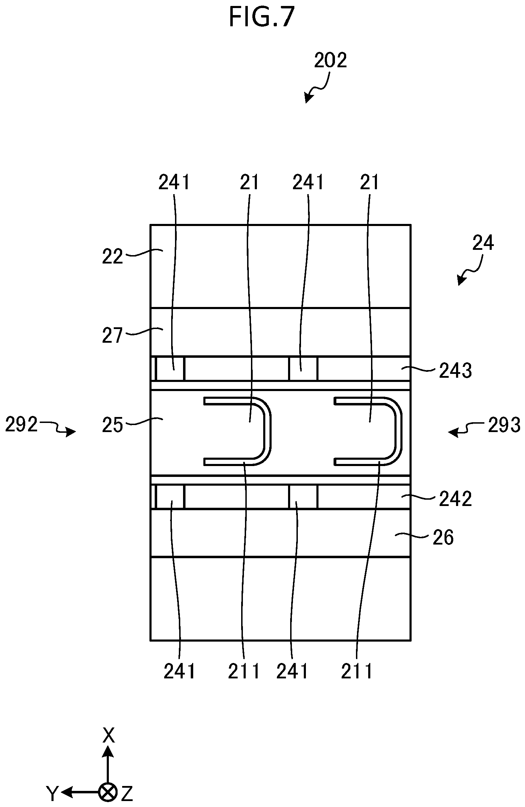

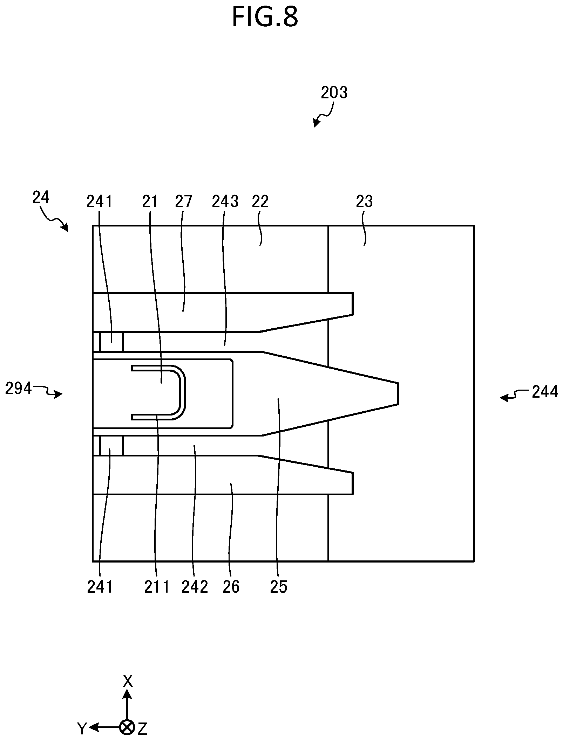

The type of the non-contact power supply device unit includes a top unit 201 (first non-contact power supply unit), an extension unit 202 (second non-contact power supply unit), and an end unit 203(third non-contact power supply unit). FIG. 6 is a top view showing an example of the top unit 201. FIG. 7 is a top view showing an example of the extension unit 202. FIG. 8 is a top view showing an example of the end unit 203.

As shown in FIG. 6, the top unit 201 is a non-contact power supply device unit that is disposed at the front end of the non-contact power supply device 20. In the top unit 201, a stopping portion 28 for stopping the cart 10 running on the top surface of the placement unit 24 is provided at a front end in the entering direction of the cart 10, and a connecting unit 291 is provided at a rear end in the entering direction of the cart 10.

Here, the connection units 291, 292, 293 and 294 are convex parts or recessed parts on a contact surface between the placement unit 24 of the own device and the other placement unit 24 of the non-contact power supply device unit which is different from that of the own device. When the connection units 291, 292, 293 and 294 are recessed parts, the connection units 291, 292, 293 and 294 are connected to the convex parts formed in the other connection units 291, 292, 293 and 294 provided in the non-contact power supply unit to be connected. Alternatively, the connection units 291, 292, 293 and 294 are holes formed in a contact surface between the placement unit 24 of the own device and the other placement unit 24 of the non-contact power supply unit which is different from that of the own device. In this case, the connection units 291, 292, 293 and 294 are connected by inserting a metal fitting or the like into the hole.

It should be noted that these connection methods are only one example, and the connection units 291, 292, 293 and 294 may connect the placement unit 24 of the own device to the other placement unit 24 of the non-contact power supply unit which is different from that of its own device in any manner.

Further, the connecting unit 291 of the top unit 201 can be connected to the connection unit 292 of the extension unit 202 or the connection unit 294 of the end unit 203, and the connecting unit 291 positions the rear side of the top unit 201 in the entering direction of the cart 10.

Therefore, the top unit 201 may be connected to the extension unit 202 or the end unit 203. In the top unit 201 shown in FIG. 6, there are provided three power transmitting units 21. However, the top unit 201 is not limited to three, and may include an arbitrary number of power transmitting units 21.

As shown in FIG. 7, the extension unit 202 is a non-contact power supply device unit disposed in the middle of the non-contact power supply device 20. Further, the extension unit 202 can be connected to the non-contact power supply device 20 in any number. That is, in the non-contact power supply device 20, the extension unit 202 may not be connected, or the one or more extension units may be connected each other.

The extension unit 202 is provided with connection units 292 and 293 on the front side and the rear side of the extension unit 202 in the entering direction of the cart 10.

A connection part 292 corresponds to a connection part 291 of the top unit 201 and a connection part 293 of the other extension unit 202 different from that of its own device, and the connection part 292 is provided on the front side of the extension unit 202 in the entering direction of the cart 10.

Accordingly, the extension unit 202 can be connected to the top unit 201 and the other extension unit 202.

Further, the connection unit 293 corresponds to the end unit 203 and the connection unit 292 of the other extension unit 202 which is different from that of its own device, and the connection unit 293 is provided on the rear side of the extension unit 202 in the entering direction of the cart 10. Accordingly, the extension unit 202 can be connected to the end unit 203 and the other extension unit 202. In addition, the extension unit 202 shown in FIG. 7 is provided with two power transmitting units 21. However, the top unit 202 is not limited to two, and may include an arbitrary number of power transmitting units 21.

As shown in FIG. 8, the end unit 203 is a non-contact power supply device unit which is disposed at the end of the non-contact power supply device 20.

Moreover, a connecting unit 294 is provided on the front side of the end unit 203 in entering direction of the cart 10, and an entrance portion 244 into which the wheels of the cart 10 enter is provided on the rear side of the end unit 203 in entering direction of the cart 10.

The width of the entrance portion 244 which is orthogonal to the entering direction of the cart 10 becomes narrower and narrower as the cart 10 advances from the entrance side of the end unit 203 in the entering direction of the cart 10.

A connection unit 294 provided on the front side of the end unit 203 in the entering direction of the cart 10 corresponds to the connection unit 291 of the top unit 201 and the connection unit 292 of the extension unit 202. Accordingly, the end unit 203 can be connected to the top unit 201 and the extension unit 202. In addition, the end unit 203 shown in FIG. 8 is provided with one power transmitting unit 21. However, the end unit 203 is not limited to one, and may include an arbitrary number of power transmitting units 21.

In such a configuration, the non-contact power supply device 20 can increase the number of the cart 10 that can be simultaneously charged by increasing the number of non-contact power supply device units. For example, in the case where the non-contact power supply device 20 for charging ten carts 10 at the same time is formed, one top unit 201, three top units 201, and 1 top units 201 may be connected.

As described above, the non-contact power supply unit such as the top unit 201, the extension unit 202, and the end unit 203 included in the non-contact power supply device 20 according to the present embodiment includes the placement unit 24 on which the cart 10 is placed. The placement unit 24 is provided with a power transmitting unit 21 which transmits power to the power receiving unit 116 by non-contact power supply. The non-contact power supply unit is provided with connection units 291, 292, 293 and 294 for connecting the placement unit 24 of the own device to the other placement unit 24 of the non-contact power supply unit which is different from that of the own device. Thus, the non-contact power supply unit can connect any number of non-contact power supply units. Therefore, the non-contact power supply unit according to the present embodiment can easily change the number of charges.

In the above embodiment, the non-contact power supply device 20 is placed in a cart place. However, the non-contact power supply device 20 may be embedded in a cart place. When the non-contact power supply device 20 is embedded in the cart place, the non-contact power supply device 20 does not have to have the slope 23 because there is no step between the non-contact power supply device 20 and the ground.

Also, the non-contact power supply device 20 may be embedded in the cart place so that the upper surface of the placement unit 24 is lower than the ground surface. In this case, the non-contact power supply device 20 may have an inclined surface that descends from the ground to the placement unit 24. As described above, since the non-contact power supply device 20 has the inclined surface that descends from the ground to the placement unit 24, the cart 10 can be placed on the placement unit 24 unless the operator intentionally pulls out the cart 10.

Further, in the above embodiment, in the non-contact power supply device 20, the first front wheel running path 242 and the second front wheel running path 243 are formed by being surrounded by the central wheel guide portion 25, the first side wheel guide portion 26 and the second side wheel guide portion 27. However, the first front wheel running path 242 and the second front wheel running path 243 may be formed by a recessed shape.

## Claims

1. A non-contact power supply unit (201, 202, 203) for supplying power to a power receiving unit (116) of a device mounted on a cart comprising:
a placement unit (24) on which the cart is to be stored;
a power transmitting unit (21) provided on the placement unit (24) , under the cart,
configured to transmit power to the power receiving unit (116) by non-contact power supply;
**characterized in that** the non-contact power supply unit comprises
a connecting unit (291-294) for connecting the placement unit (24) of the own device to the placement unit (24) of a non-contact power supply unit different from that of the own device.

2. The non-contact power supply unit as claimed in claim 1, wherein the connecting unit (291) is provided at a position corresponding to the type of the own device.

3. The non-contact power supply unit as claimed in claim 1 or 2, the non-contact power supply unit (201) being a first non-contact power supply unit wherein a stopping portion (28) for stopping a cart running on the upper surface of the placement unit (24) is provided at a front end of the non-contact power supply unit in an entering direction in which the cart advances onto placement unit (24) to be stored, and the connecting unit (291) is provided at a rear end in the entering direction of the non-contact power supply unit.

4. The non-contact power supply unit as claimed in claim 1 or 2, the non-contact power supply unit being a second non-contact power supply unit (202) wherein the connecting unit (292, 293) is provided both at a front end of the non-contact power supply unit in an entering direction in which the cart advances onto placement unit (24) to be stored, and at a rear end in the entering direction of the non-contact power supply unit.

5. The non-contact power supply unit as claimed in claim 1 or 2, the non-contact power supply unit being a third non-contact power supply unit (203) wherein a connecting unit (294) is provided at a front end of the cart in an entering direction in which the cart advances onto placement unit (24) to be stored, and at least one running path (243) of a wheel of the cart, wherein the running path (243) has an entering part having a width in a direction orthogonal to the entering direction which becomes narrower in an entering direction .

6. A non-contact power supply device (20) comprising a plurality of non-contact power supply units (201, 202, 203) according to any one of claims 1 to 5.

7. The non-contact power supply device (20) according to claim 6, comprising a first non-contact power supply unit (201), at least one second non-contact power supply unit (202) and a third non-contact power supply unit (203), wherein the first non-contact power supply unit (201) is connected to the second non-contact power supply unit (202) through the connecting unit (291) thereof, the third non-contact power supply unit (203) is connected to the second non-contact power supply unit (202) through the connecting unit (294) thereof.

8. The non-contact power supply device (20) according to claim 7, comprising a plurality of second non-contact power supply units (202) wherein the connecting unit (292) formed at the front end of one of the second non-contact power supply units (202) is connected to the connecting unit (293) formed at the rear end of another second non-contact power supply units (202).

## Patentansprüche

1. Kontaktlose Energieversorgungseinheit (201, 202, 203) zur Versorgung von Energie an eine Energieaufnahmeeinheit (116) einer Vorrichtung, die auf einen Wagen montiert ist, umfassend:
eine Anbringungseinheit (24), auf die der Wagen gelagert werden soll;
eine Energieübertragungseinheit (21), die auf der Anbringungseinheit (24) bereitgestellt ist, unter dem Wagen,
konfiguriert, um Energie an die Energieaufnahmeeinheit (116) durch eine kontaktlose Energieversorgungseinheit zu übertragen;
**dadurch gekennzeichnet, dass** die kontaktlose Energieversorgungseinheit eine Verbindungseinheit (291 - 294) umfasst, um die Anbringungseinheit (24) der eigenen Vorrichtung an die Anbringungseinheit (24) einer kontaktlosen Energieversorgungseinheit verschieden von derjenigen der eigenen Vorrichtung zu verbinden.

2. Kontaktlose Energieversorgungseinheit nach Anspruch 1, wobei die Verbindungseinheit (291) an einer Position bereitgestellt ist, die der Art der eigenen Vorrichtung entspricht.

3. Kontaktlose Energieversorgungseinheit nach Anspruch 1 oder 2, wobei die kontaktlose Energieversorgungseinheit (201) eine erste kontaktlose Energieversorgungseinheit ist, wobei ein Stoppabschnitt (28) zum Stoppen eines Wagens, der auf der oberen Fläche der Anbringungseinheit (24) läuft, an einem vorderen Ende der kontaktlosen Energieversorgungseinheit in einer Eintrittsrichtung bereitgestellt ist, in der der Wagen auf die Anbringungseinheit (24) vorrückt, um gelagert zu werden, und die Verbindungseinheit (291) an einem hinteren Ende in der Eintrittsrichtung der kontaktlosen Energieversorgungseinheit bereitgestellt ist.

4. Kontaktlose Energieversorgungseinheit nach Anspruch 1 oder 2, wobei die kontaktlose Energieversorgungseinheit eine zweite kontaktlose Energieversorgungseinheit (202) ist, wobei die Verbindungseinheit (292, 293) sowohl an einem vorderen Ende der kontaktlosen Energieversorgungseinheit in einer Eintrittsrichtung, in der der Wagen auf die Anbringungseinheit (24) vorrückt, um gelagert zu werden, als auch an einem hinteren Ende in der Eintrittsrichtung der kontaktlosen Energieversorgungseinheit bereitgestellt ist.

5. Kontaktlose Energieversorgungseinheit nach Anspruch 1 oder 2, wobei die kontaktlose Energieversorgungseinheit eine dritte kontaktlose Energieversorgungseinheit (203) ist, wobei eine Verbindungseinheit (294) an einem vorderen Ende des Wagens in einer Eintrittsrichtung bereitgestellt ist, in der der Wagen auf die Anbringungseinheit (24) vorrückt, um gelagert zu werden, und mindestens ein Laufweg (243) eines Rads des Wagens, wobei der Laufweg (243) einen Eintrittsteil mit einer Breite in einer orthogonalen Richtung zur Eintrittsrichtung aufweist, die in einer Eintrittsrichtung enger wird.

6. Kontaktlose Energieversorgungseinheit (20), umfassend eine Vielzahl von kotaktlosen Energieversorgungseinheiten (201, 202, 203) nach einem der Ansprüche 1 bis 5.

7. Kontaktlose Energieversorgungseinheit (20) nach Anspruch 6, umfassend eine erste kontaktlose Energieversorgungseinheit (201), mindestens eine zweite kontaktlose Energieversorgungseinheit (202) und eine dritte kontaktlose Energieversorgungseinheit (203), wobei die erste kontaktlose Energieversorgungseinheit (201) mit der zweiten kontaktlosen Energieversorgungseinheit (202) durch die Verbindungseinheit (291) davon verbunden ist, die dritte kontaktlose Energieversorgungseinheit (203) mit der zweiten kontaktlosen Energieversorgungseinheit (202) durch die Verbindungseinheit (294) davon verbunden ist.

8. Kontaktlose Energieversorgungseinheit (20) nach Anspruch 7, umfassend eine Vielzahl von zweiten kontaktlosen Energieversorgungseinheiten (202), wobei die Verbindungseinheit (292), gebildet am vorderen Ende mindestens einer zweiten kontaktlosen Energieversorgungseinheit (202) mit der Verbindungseinheit (293) verbunden ist, die am hinteren Ende einer weiteren zweiten kontaktlosen Energieversorgungseinheit (202) gebildet ist.

## Revendications

1. Unité de transfert d'énergie sans fil (201, 202, 203) pour transférer l'énergie à une unité de réception d'énergie (116) d'un dispositif monté sur un chariot comprenant :
une unité de mise en place (24) sur laquelle le chariot doit être stocké ;
une unité de transmission d'énergie (21) prévue sur l'unité de mise en place (24) sous le chariot, configurée pour transmettre l'énergie à l'unité de réception d'énergie (116) par le transfert d'énergie sans fil ;
**caractérisée en ce que** l'unité de transfert d'énergie sans fil comprend :
une unité de connexion (291-294) pour connecter l'unité de mise en place (24) du dispositif en question, à l'unité de mise en place (24) d'une unité de transfert d'énergie sans fil différente de celle du dispositif en question.

2. Unité de transfert d'énergie sans fil selon la revendication 1, dans laquelle l'unité de connexion (291) est prévue dans une position correspondant au type du dispositif en question.

3. Unité de transfert d'énergie sans fil selon la revendication 1 ou 2, l'unité de transfert d'énergie sans fil (201) étant une première unité de transfert d'énergie sans fil dans laquelle une partie de butée (28) pour arrêter un chariot circulant sur la surface supérieure de l'unité de mise en place (24) est prévue au niveau d'une extrémité avant de l'unité de transfert d'énergie sans fin dans une direction d'entrée dans laquelle le chariot avance sur l'unité de mise en place (24) pour être stocké, et l'unité de connexion (291) est prévue au niveau d'une extrémité arrière dans la direction d'entrée de l'unité de transfert d'énergie sans fil.

4. Unité de transfert d'énergie sans fil selon la revendication 1 ou 2, l'unité de transfert d'énergie sans fil étant une deuxième unité de transfert d'énergie sans fil (202) dans laquelle l'unité de connexion (292, 293) est prévue à la fois au niveau d'une extrémité avant de l'unité de transfert d'énergie sans fil dans une direction d'entrée dans laquelle le chariot avance sur l'unité de mise en place (24) pour être stocké, et au niveau d'une extrémité arrière dans la direction d'entrée de l'unité de transfert d'énergie sans fil.

5. Unité de transfert d'énergie sans fil selon la revendication 1 ou 2, l'unité de transfert d'énergie sans fil étant une troisième unité de transfert d'énergie sans fil (203) dans laquelle une unité de connexion (294) est prévue au niveau d'une extrémité avant du chariot dans une direction d'entrée dans laquelle le chariot avance sur l'unité de mise en place (24) pour être stocké, et au moins une voie de roulement (243) d'une roue du chariot, dans laquelle la voie de roulement (243) a une partie d'entrée ayant une largeur dans une direction orthogonale à la direction d'entrée qui se rétrécit dans une direction d'entrée.

6. Dispositif de transfert d'énergie sans fil (20) comprenant une pluralité d'unités de transfert d'énergie sans fil (201, 202, 203) selon l'une quelconque des revendications 1 à 5.

7. Dispositif de transfert d'énergie sans fil (20) selon la revendication 6, comprenant une première unité de transfert d'énergie sans fil (201), au moins une deuxième unité de transfert d'énergie sans fil (202) et une troisième unité de transfert d'énergie sans fil (203), dans lequel la première unité de transfert d'énergie sans fil (201) est raccordée à la deuxième unité de transfert d'énergie sans fil (202) par le biais de son unité de connexion (291), la troisième unité de transfert d'énergie sans fil (203) est connectée à la deuxième unité de transfert d'énergie sans fil (202) par le biais de son unité de connexion (294).

8. Dispositif de transfert d'énergie sans fil (20) selon la revendication 7, comprenant une pluralité de deuxièmes unités de transfert d'énergie sans fil (202), dans lequel l'unité de connexion (292) formée au niveau de l'extrémité avant des deuxièmes unités de transfert d'énergie sans fil (202) est connectée à l'unité de connexion (293) formée au niveau de l'extrémité arrière d'autres deuxièmes unités de transfert d'énergie sans fil (202).
